# EUROPÄISCHE PATENTANMELDUNG

(11) **EP 0 539 715 A1**
(43) Veröffentlichungstag der Anmeldung: **05.05.1993**
(21) Anmeldenummer: 92116001.6
(22) Anmeldetag: 18.09.1992
(51) Int. Cl.: G01C 5/04

(54) **Hydrostatische Nivellierverfahren und Vorrichtung hierzu**

(30) Priorität: 19.10.1991 DE 4134585
(71) Anmelder: Brutscher, Siegbert, D-65205 Wiesbaden (DE)
(72) Erfinder: Brutscher, Siegbert, D-65205 Wiesbaden (DE)
(74) Vertreter: Weber, Dieter, Dr.

(57) **Zusammenfassung**

Die vorliegende Erfindung betrifft ein Verfahren und eine Vorrichtung zum Übertragen eines Höhenniveaus mittels einer Schlauchwaage . Um ein derartiges Verfahren und eine entsprechende Vorrichtung dahingehend zu verbessern, daß das Übertragen von Höhenniveaus und das Messen von Niveauunterschieden noch einfacher und leichter werden, wird erfindungsgemäß vorgeschlagen, daß eine vom Schlauch unabhängige, jedoch mit einem Schlauchabschnitt verbindbare Skala mit einem Fixpunkt entweder auf das Flüssigkeitsniveau der Schlauchwaage oder auf den zu übertragenden Höhenwert eingestellt wird, daß eine verschiebbare Markierung an der Skala auf den jeweils anderen Wert, d.h. den zu übertragenden Höhenwert oder das Flüssigkeitsniveau, eingestellt wird und daß die Skala, vorzugsweise zusammen mit dem beweglichen Ende der Schlauchwaage an den Übertragungsort transportiert wird, wobei wiederum die Markierung oder der Fixpunkt auf das Flüssigkeitsniveau eingestellt wird und das gewünschte Höhenniveau von dem jeweils anderen Punkt (Fixpunkt oder Markierung) übernommen wird.

## Beschreibung

Die vorliegende Erfindung betrifft ein Verfahren zum Übertragen eines Höhenniveaus mittels einer Schlauchwaage.

Ebenso betrifft die Erfindung eine Vorrichtung zum Übertragen eines Höhenniveaus und auch zum Messen von Niveauunterschieden, bestehend aus einer Schlauchwaage mit einem im allgemeinen ortsfest anzuordnenden Schlauchende mit Ausgleichsbehälter und einem relativ hierzu bewegbaren Schlauchende mit Skala.

Schlauchwaagen und Niveaumessungen mit Schlauchwaagen sind an sich seit langem bekannt. Eine solche Schlauchwaage funktioniert nach dem Prinzip der kommunizierenden Röhren, besteht also aus einem im Prinzip beliebig langen, mit einer Flüssigkeit, im allgemeinen Wasser, gefüllten Schlauch, wobei zumindest die Schlauchenden durchsichtig sein sollten, damit das Niveau des Flüssigkeitsspiegels im Schlauch erkennbar ist.

Um beispielsweise ein bestimmtes Höhenniveau zu übertragen, kann man im einfachsten Fall ein Schlauchende fixieren und durch Anheben oder Absenken des anderen Schlauchendes erreichen, daß sich das Flüssigkeitsniveau im fixierten Ende genau auf der Höhe des gewünschten Niveaus befindet, woraufhin das andere Schlauchende über eine Entfernung mitgenommen werden kann, die in etwa der Gesamtlänge des Schlauches (abzüglich der aufwärts gebogenen Enden) entspricht. Nach dem Gesetz der kommunizierenden Röhren muß dann auch das Flüssigkeitsniveau im beweglichen Schlauchende auf genau derselben Höhe liegen, wie im fixierten Schlauchende. Allerdings erfordert dieses Verfahren die Kontrolle des Niveaus im fixierten Schlauchende durch eine zweite Person, da durch Anheben oder Absenken des beweglichen Schlauchendes der Flüssigkeitspegel auch im fixierten Schlauchende variiert, und zwar genau um den halben Betrag der Anhebung oder Absenkung des beweglichen Schlauchendes, wenn man konstanten Schlauchquerschnitt voraussetzt. Den durch Absenken oder Anheben des beweglichen Schlauchendes hervorgerufenen Fehler kann man dadurch drastisch verringern, daß man das erste Schlauchende im Querschnitt erweitert, so daß beim Anheben oder Absenken des beweglichen Schlauchendes der Flüssigkeitsspiegel in der Erweiterung des ersten Schlauchendes verhältnismäßig wenig schwankt und zwar, bezogen auf das Anheben oder Absenken des beweglichen Schlauchteils um einen Bruchteil, welcher dem Verhältnis des Schlauchquerschnitts zum Querschnitt der Erweiterung plus dem Schlauchquerschnitt steht.

Die "Schlaucherweiterung" besteht im allgemeinen aus einem an dem fixierten Schlauchende angesetzten, zusätzlichen Behälter.

Ist der Behälter genügend groß und hat er insbesondere einen möglichst großen horizontalen Querschnitt, so kann man den durch Anheben oder Absenken des freien Schlauchendes hervorgerufenen Fehler in erster Näherung vernachlässigen. Nach wie vor muß jedoch zur Übertragung eines bestimmten Höhenniveaus der Flüssigkeitspegel im Schlauch und im Behälter auf das entsprechende Niveau eingestellt werden. Man bringt also das bewegliche Schlauchende und den Behälter mit dem zu fixierenden Schlauchende in die Nähe des Ausgangspunktes und senkt beide soweit ab bzw. hebt beide soweit an, bis im freien Schlauchende das Flüssigkeitsniveau mit dem zu übertragenden Höhenniveau übereinstimmt. Das Flüssigkeitsniveau im Behälter befindet sich selbstverständlich auf gleicher Höhe, so daß der entsprechende Behälter bei einem bekannten und unter der Bezeichnung "Modus" auf dem Markt eingeführten System undurchsichtig sein kann.

Anschließend bewegt man das freie Schlauchende dorthin, wohin das betreffende Höhenniveau übertragen werden soll, welches dann entsprechend dem Flüssigkeitsniveau im freien Schlauchende übertragen werden kann. Außerdem ist bei dem bekannten System das freie Schlauchende mit einer Meß-Skala versehen, so daß Höhenunterschiede ablesbar sind.

Als nachteilig wird jedoch bei dem bekannten System angesehen, daß bei der Höhenübertragung das Flüssigkeitsniveau immer auf das zu übertragende Niveau eingestellt werden muß, sofern man nicht zusätzliche Hilfsmittel verwenden will.

Der vorliegenden Erfindung liegt also die Aufgabe zugrunde, das Verfahren und die Vorrichtung der eingangs genannten Art dahingehend zu verbessern, daß das Übertragen von Höhenniveaus und das Messen von Niveauunterschieden noch einfacher und leichter werden.

Hinsichtlich des Verfahrens wird diese Aufgabe dadurch gelöst, daß eine vom Schlauch unabhängige, jedoch mit einem Schlauchabschnitt verbindbare Skala mit einem Fixpunkt entweder auf das Flüssigkeitsniveau der Schlauchwaage oder auf den zu übertragenden Höhenwert eingestellt wird, daß eine verschiebbare Markierung an der Skala auf den jeweils anderen Wert, d.h. den zu übertragenden Höhenwert oder das Flüssigkeitsniveau, eingestellt wird und daß die Skala, vorzugsweise zusammen mit dem beweglichen Schlauchende, an den Übertragungsort transportiert wird, wobei wiederum die Markierung oder der Fixpunkt auf das Flüssigkeitsniveau eingestellt und das gewünschte Höhenniveau von dem jeweils anderen Punkt (Fixpunkt oder Markierung) übernommen wird.

Diese Verfahrensausgestaltung ermöglicht es, den Ausgleichsbehälter unabhängig von dem zu übertragenden Höhenniveau in einer bestimmten Höhe zu belassen, die z.B. für ein bequemes Arbeiten und Ablesen von Meßwerten optimal ist. Die dem beweglichen Schlauchende zugeordnete Meß-Skala, die relativ zu diesem Schlauchende verschiebbar ist, ermöglicht dennoch die Übertragung beliebiger Höhenniveauwerte. Man bringt hierzu die Meß-Skala zusammen mit dem beweglichen Schlauchende an den Höhenfestpunkt (z. B. Meterriß im Wohnungsbau) heran und verschiebt die Skala so, daß z.B. ein Fixpunkt der Skala mit dem Flüssigkeitsniveau übereinstimmt. Ein gleichfalls an der Skala angeordnetes, verschiebbares Markierelement wird dann auf das zu übertragende Höhenniveau eingestellt. Das bewegliche Schlauchende und die Skala werden an den Ort gebracht wohin das entsprechende Höhenniveau übertragen werden soll. Die Skala wird dann an diesem Ort soweit angehoben oder abgesenkt, daß wiederum der erwähnte Fixpunkt mit dem Flüssigkeitsniveau übereinstimmt, so daß konsequenterweise das eingestellte Markierelement den zu übertragenden Höhenwert angibt. Da das Schlauchende selbst dabei nicht in vertikaler Richtung bewegt werden muß, vermeidet man bei dieser Einstellung auch die anderenfalls auftretenden, störenden, langsamen Schwingungen des Füssigkeitspegels im Schlauch.

Umgekehrt kann selbstverständlich auch das Markierelement zunächst auf das Flüssigkeitsniveau eingestellt werden, wenn die Skala so verschoben wird, daß ihr Fixpunkt mit dem zu übertragenden Höhenwert übereinstimmt. Dieser sogenannte Fixpunkt kann selbstverständlich auch durch ein weiteres Markierelement, das auch verschiebbar sein kann, definiert sein.

Zweckmäßigerweise wählt man als Fixpunkt der Skala deren Nullpunkt oder Endpunkt.

Zweckmäßigerweise haben das bewegliche Schlauchende und die Skala eine gemeinsame Halterung, so daß sie leicht aneinander fixiert werden können.

Hinsichtlich der eingangs genannten Vorrichtung wird die der Erfindung zugrundeliegende Aufgabe dadurch gelöst, daß die Skala relativ zum beweglichen Schlauchende in Längsrichtung dieses Schlauchendes verschiebbar und in der verschobenen Stellung fixierbar ist.

Weiterhin hat es sich als besonders zweckmäßig erwiesen, wenn das bewegliche Schlauchelement und die Skala an einem (gemeinsamen) Stativ angebracht sind. Das bewegliche Schlauchende kann dann an einem beliebigen Ort abgestellt werden und die Bedienperson hat beide Hände zum Arbeiten frei.

Besonders zweckmäßig hat sich dabei eine Ausführungsform erwiesen, wenn das Stativ einen Vertikalstab mit einer Knickstelle aufweist, die sich unterhalb der Befestigung für die Skala und den Schlauch am Vertikalstab befindet. Ein Stativ erfordert zur Erzielung der Standfestigkeit selbstverständlich einen Fuß, der das Heranbewegen z.B. an eine vertikale Wand erschwert oder unmöglich macht. Aufgrund der Knickstelle kann jedoch das Stativ gegen eine Wand oder dergleichen gekippt werden, wobei aufgrund der Knickstelle der obere Teil des Vertikalstabes des Stativs zusammen mit dem Schlauchende und der Skala bündig an die Wand angelegt werden kann. Die Übertragungsgenauigkeit wird hierdurch verbessert. Dabei spielt es keine Rolle, ob sich durch das Kippen des Stativs die Höhe des freien Schlauchendes verändert, da der Schlauch mit der Skala am Stativ in Vertikalrichtung beweglich und fixierbar und auch die Skala entlang des freien Schlauchendes verschiebbar ist und das Flüssigkeitsniveau im freien Schlauchende jederzeit in Übereinstimmung mit dem erwähnten Fixpunkt bzw. Markierelement gebracht werden kann.

Dabei hat es sich als besonders zweckmäßig erwiesen, wenn die Knickstelle ein federnd vorgespanntes Scharnier aufweist, wobei die Vorspannung so gerichtet ist, daß das Stativ ohne äußere Krafteinwirkung an der Knickstelle gerade durchgehend verläuft. Letzteres erreicht man gegebenenfalls auch durch einseitige Anordnung des Scharniers, wobei allein die Schwerkraft die erforderliche Rückstellkraft liefert.

Zweckmäßigerweise werden sowohl das ortsfest zu haltende Schlauchende als auch das bewegbare Schlauchende an teleskopierbaren Rohrstativen befestigt. Diese ermöglichen es, die gesamte Vorrichtung schnell zu einer kompakten und transportablen Einheit zusammenzuschieben.

Weiterhin weist die erfindungsgemäße Vorrichtung in ihrer bevorzugten Ausführungsform eine Schlauchrolle auf, auf welcher der Schlauch aufgewickelt wird, wobei die Wickelwelle der Rolle hohl ist und zusätzliche eine zentrale Drehdurchführung aufweist, die einen axialen Anschluß und einen radialen Anschluß aufweist, wobei vorzugsweise der ortsfeste Schlauchteil mit dem axialen Anschluß und das bewegliche Schlauchteil mit dem radialen Anschluß verbunden ist. Eine solche Drehdurchführung besteht im wesentlichen aus einem Rohr, welches an einem Ende einen in Richtung der Rohrachse verlaufenden axialen Schlauchanschluß hat. Das andere Ende des Rohres weist eine Drehdichtung auf, deren hier als stehend angenommener Teil mit dem zentralen Rohr verbunden ist, während der relativ hierzu drehbare Teil mit einem um 90° abgewinkelten Rohrstück verbunden ist, wobei der um 90° zur Rohrachse abgewinkelte Teil den zweiten Schlauchanschluß aufweist. Dieser verläuft also in radialer Richtung vom Zentrum der Wickelwelle nach außen. Die axiale Lage dieses in radialer Richtung verlaufenden Anschlusses ist dabei nicht näher festgelegt, insbesondere können die Drehdichtung und der in radialer Richtung verlaufende Schlauchanschluß auch in axialer Richtung außerhalb der Wickelwelle bzw. der Schlauchrolle angeordnet sein. Zweckmäßigerweise wird über eine Durchführung im Wickelkörper ein Ende des aufgewickelten Schlauchteiles mit dem radialen Anschluß der Drehdurchführung verbunden. Dieser radiale Anschluß kann sich mit der Schlauchrolle drehen, so daß ein leichtes Auf- und Abwickeln des Schlauches auf die Schlauchrolle möglich ist. Die beiden Schlauchenden sind dann über die hohle Welle bzw. die Drehdurchführung und die genannten radialen und axialen Anschlüsse miteinander verbunden. Gleichzeitig ermöglicht die Schlauchrolle das platzsparende Aufrollen des unter Umständen relativ langen Schlauches, was auch das Arbeiten mit der Vorrichtung gegenüber einem zu Verknotungen oder Knicken neigenden losen Schlauch erleichtert.

Es versteht sich, das eine Schlauchrolle mit einer Drehdurchführung, wie sie vorstehend beispielhaft beschrieben ist, auch für beliebige andere Schlauchwaagen vorteilhaft anwendbar ist, die beispielsweise keine zum Schlauch verschiebbare Skala oder nur ein oder kein Stativ aufweisen.

Schließlich sind in der bevorzugten Ausführungsform der Erfindung beide Stative und die Rolle auf einem gemeinsamen Fuß bzw. an einem gemeinsamen Gestell zu einer kompakten, transportablen Einheit zusammensteckbar.

Weitere Vorteile, Merkmale und Anwendungsmöglichkeiten der vorliegenden Erfindung werden deutlich anhand der folgenden Beschreibung einer bevorzugten Ausführungsform und der dazugehörigen Figuren. Es zeigen:
- Figur 1: zwei Stative 10, 10' zur Halterung für die beiden Enden der Schlauchwaage,
- Figur 2: den oberen Abschnitt des Stativs 10 aus Figur 1 mit daran angebrachtem Schlauchhalter und Skala,
- Figur 3a: schematisch das Übertragen eines bestimmten Höhenwertes,
- Figur 3b: die Messung von Höhendifferenzen,
- Figur 4: das System in einem ersten zusammengesteckten Zustand,
- Figur 5: schematisch die Funktion des Knickstativs und
- Figur 6: das System in einem zweiten zusammengesteckten Zustand.

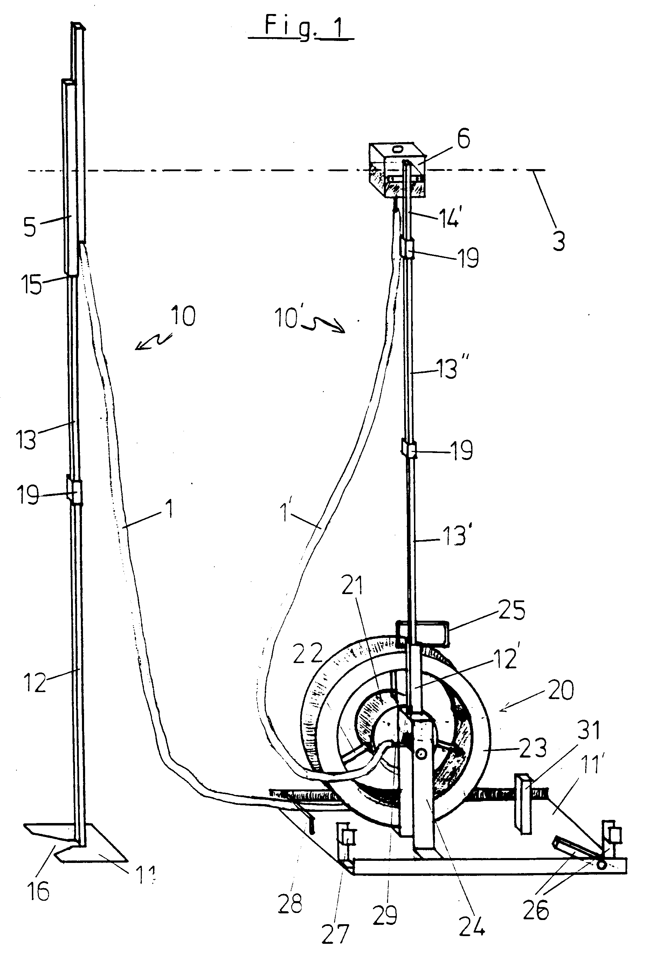

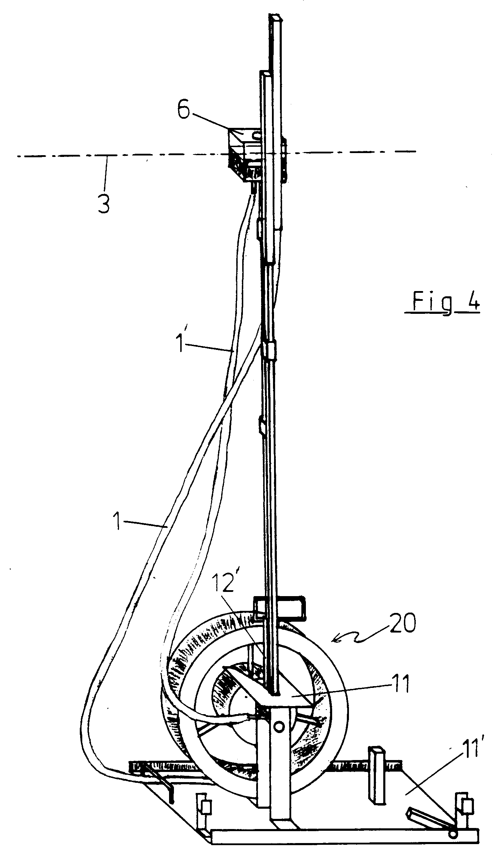

In Figur 1 erkennt man zwei schematisch dargestellte Rohrstative 10, 10' mit jeweils einer rechteckigen Fußplatte 11, 11', wobei die Fußplatte 11 einen sich vom Rand zur Mitte erstreckenden Schlitz 16 aufweist, der mindestens so breit ist, wie das sich vertikal von der Fußplatte 11' erstreckende Rohr 12' des Stativs 10'. Die beiden Stative können so zusammengeschoben werden, wie dies in Figur 4 dargestellt ist.

Die sich vertikal erstreckenden Rohre der Stative 10, 10' sind teleskopierbar oder zusammensteckbar, wobei das Endrohr des Stativs 10' einen Ausgleichsbehälter 6 mit dem von dessen Boden ausgehenden Schlauchende 1' trägt, während das Endrohr des Stativs 10 einen Schlauchhalter 5 trägt oder als Schlauchhalter ausgebildet ist und zusätzlich auch eine in vertikaler Richtung verschiebbare Skala 2 trägt. Der Begriff Skala wird im Rahmen dieser Beschreibung so verwendet, daß er einen körperlichen Gegenstand mit einer Skaleneinteilung bezeichnet.

Die Rohre 12, 13, 13', 13'' und 14' der beiden Stative 10, 10' sind über Verbindungsmuffen 19 zusammengesteckt, können jedoch ebensogut auch als Teleskoprohre ausgebildet sein. Figur 1 zeigt den betriebsbereiten Zustand der Schlauchwaage. Das Stativ 10' mit der Schlauchrolle 20 bleibt während einer Messung, d.h. während eines Nivellement oder während einer Fixpunktübertragung im allgemeinen ortsfest stehen, während das Stativ 10 überall dorthin getragen und abgestellt wird, wo Höhendifferenzen zu messen, bzw. wohin bestimmte Höhenwerte übertragen werden sollen. Hierzu ist der Schlauch, der mit seinem Schlauchende 1 am Schlauchhalter 5 des beweglichen Stativs 10 befestigt ist, auf eine Schlauchtrommel 20 aufgewickelt. Der Schlauch verläuft dabei unter einem Führungsbügel 28 hindurch, welcher auf der Fußplatte 11' befestigt ist. Die Schlauchtrommel 20 besteht aus einem Wickelkörper 23, einer Hohlwelle 21 und die Welle 21 und den Wickelkörper 23 verbindenden Speichen 22, von denen eine als Durchflußkörper ausgebildet ist, der sich bis auf die Oberfläche des Wickelkörpers 23 erstreckt und dort einen Schlauchanschluß aufweist. Auf diesen nicht dargestellten Schlauchanschluß ist das dem Stativ 10 abgewandte Ende des Schlauches 1 aufgesteckt. Die Verbindung der Schläuche 1 und 1' besteht dann über eine der Speichen 22, die Hohlwelle 21 sowie einen koaxial von der Hohlwelle 21 sich erstreckenden Rohranschluß, weicher im einzelnen nicht dargestellt ist und welcher über eine Drehdurchführung mit der Hohlwelle 21 verbunden ist. Derartige flüssigkeitsdichte Durchführungen von stehenden in drehende Elemente bzw. umgekehrt sind an sich bekannt und bedürfen hier keiner näheren Erläuterung. Der zur Welle 21 koaxiale Rohranschluß ist an einem Bügel 24 gehaltert und dient gleichzeitig als Achswelle für die Schlauchtrommel 20. Ein Anschluß 29 ist vorgesehen für die Verbindung mit einem Ende des Schlauches 1', dessen anderes Ende mit dem Ausgleichsbehälter 6 verbunden ist.

Alternativ zu der vorstehend beschriebenen Ausführungsform kann die Hohlwelle 21 auch mit einer zentralen und als Fertigteil erhältlichen Drehdurchführung ausgerüstet sein. Eine solche Drehdurchführung besteht im wesentlichen aus einem Rohr, welches an einem Ende in Längsrichtung des Rohres verlaufend einen Axialanschluß und am anderen Ende eine Drehdichtung aufweist, deren eines Teil mit dem Rohr und deren anderes Teil mit einem weiteren, gegebenenfalls um 90° abgewinkelten Rohrstück verbunden ist, wobei an dem um 90° abgewinkelten Teil, das dementsprechend in radialer Richtung zu dem erstgenannten Rohr verläuft, ein weiterer Schlauchanschluß vorgesehen ist. Auf die Abwinkelung kommt es jedoch nicht an, auch der zweite Schlauchanschluß könnte in axialer Richtung verlaufen, wobei das Schlauchende dann auf diesen axialen Anschluß aufzustecken wäre. Wesentlich ist nur die relative Verdrehbarkeit der beiden Schlauchanschlüsse um die Achse der Schlauchrolle.

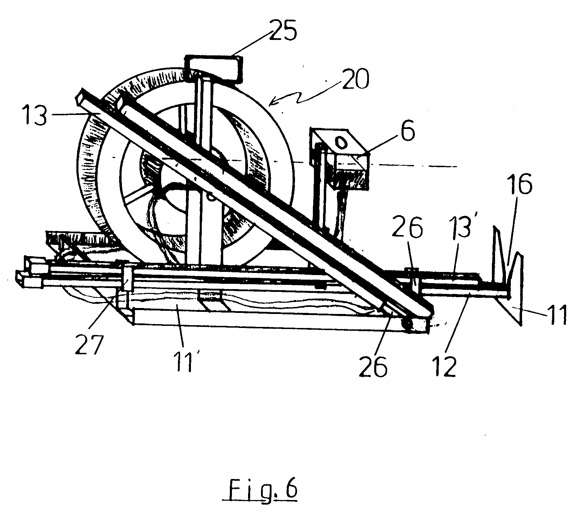

Man erkennt weiterhin in Figur 1 noch einen Tragegriff 25, das Grundrohr 12', auf welches die übrigen Stativrohre aufgesteckt sind und Halterungselemente 26, 27, welche die verschiedenen Stativteile in einem zusammengesteckten Zustand aufnehmen, wie in Figur 6 dargestellt.

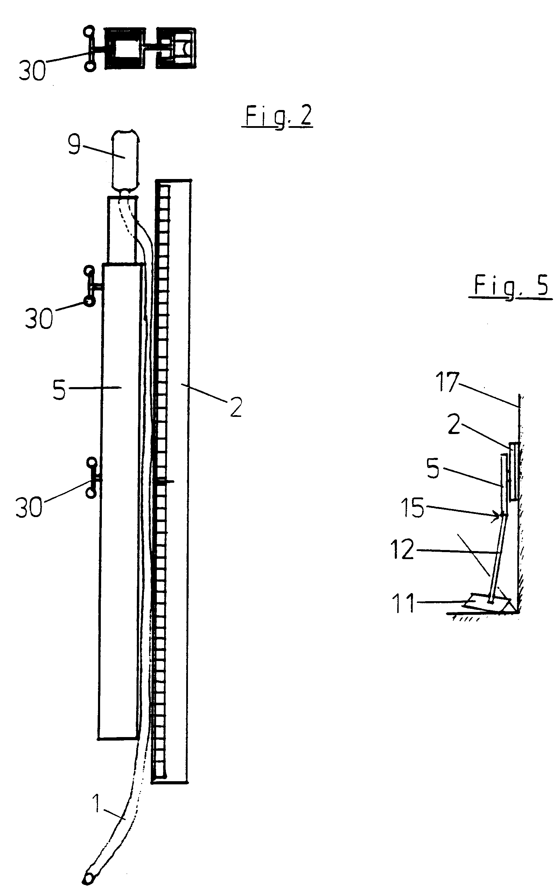

Figur 2 zeigt nochmals vergrößert den oberen Abschnitt des Statives 10 mit dem Schlauchhalter 5 in einer seitlichen Ansicht und im Querschnitt (oberer Teil der Figur 2). Der Schlauchhalter 5 ist über Klemmschrauben 30, die zur leichteren Betätigung einen Flügelkopf aufweisen, in vertikaler Richtung verschiebbar und fixierbar auf dem oberen Abschnitt des Stativrohres 13 befestigt. Hierdurch kann die Höhe des oberen Endes des Schlauches 1 zusammen mit der Skala 2 variiert werden. Zusätzlich ist die Skala 2 über eine Klemmfederverbindung an dem Schlauchhalter 5 befestigt, so daß die Skala 2 auch unabhängig vom Schlauchhalter 5 in vertikaler Richtung verschiebbar ist, dabei jedoch in jeder beliebigen Stellung selbsthemmend stehen bleibt, gegebenenfalls auch in einer eingestellten Position mit einer Klemmschraube, einem Klemmnocken oder dergleichen fixiert werden kann. Das obere Ende des Schlauches 1 weist ein Lüftungsventil 9 auf, welches Luft in das obere Ende des Schlauches 1 hinein und auch aus diesem heraus läßt, jedoch sofort schließt, wenn der Flüssigkeitsspiegel im Schlauch 1 in den Bereich des Lüftungsventils 9 steigt. Man vermeidet so insbesondere beim Transport der Schlauchwaage Flüssigkeitsverluste. Wahlweise können das obere Schlauchende oder das Lüftungsventil 9 auch mit einem Absperrhahn versehen sein.

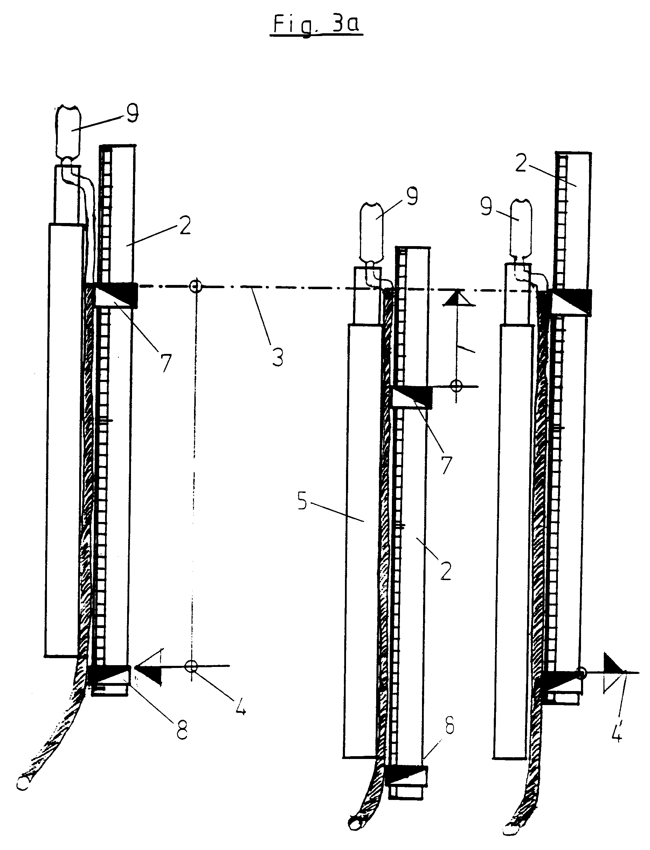

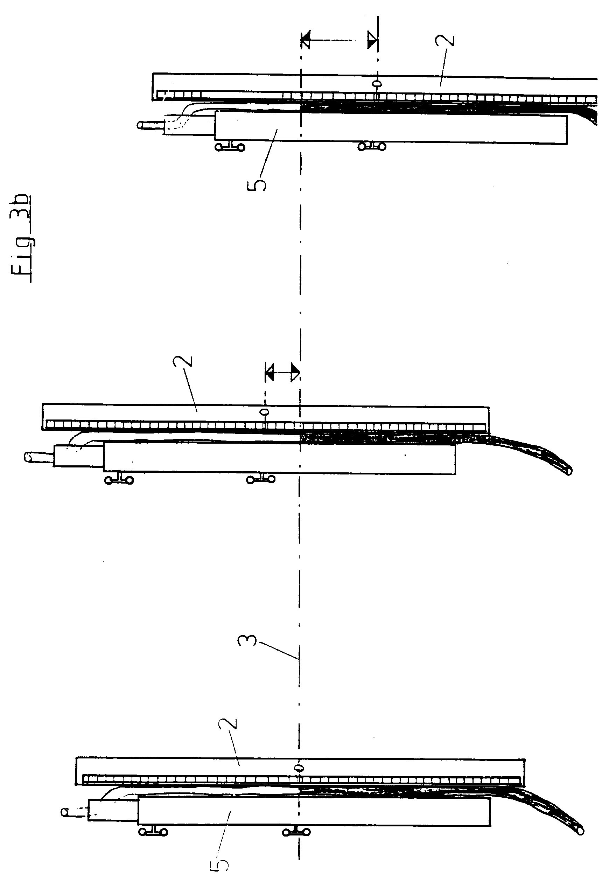

In Figur 2 nicht dargestellt sind zusätzliche Markierelemente, die in vertikaler Richtung verschiebbar an der Skala angebracht sind und ebenfalls selbsthemmend in jeder Position stehen bleiben und gegebenenfalls auch in einer bestimmten eingestellten Position an der Skala festgeklemmt werden können. Diese Markierelemente 7, 8 und ihre Funktion werden nun im Zusammenhang mit Figur 3a beschrieben, wobei teilweise auch auf Figur 1 Bezug genommen wird. Figur 3a soll schematisch die Übertragung eines Höhenwertes 4 von einem Ort zu einem anderen Ort 4' veranschaulichen, wobei die absolute Höhe des Punktes 4 mit dem des Punktes 4' übereinstimmen soll. Hierzu wird das Stativ 10 an den Ort gebracht, wo der Höhenwert 4 abgenommen werden soll. Das Markierelement 7 wird in Übereinstimmung mit dem Flüssigkeitspegel im Schlauch 1 gebracht, das Markierelement 8 wird auf den Höhenwert 4 eingestellt. Anschließend wird das Stativ an den Ort gebracht, an welchen der Höhenwert 4 übertragen werden soll. Bei dem hier dargestellten Beispiel ist angenommen, daß der Boden an diesem Ort etwas tiefer liegt als dort, wo der Höhenwert 4 abgenommen wurde, so daß der Flüssigkeitspegel im Schlauch 1 sich entsprechend nach oben verschiebt. Gegebenenfalls können jedoch auch zusätzliche Rohre 13 in das Stativ 10 eingefügt oder es können solche Rohre herausgenommen werden, damit der Flüssigkeitspegel in den Verschiebebereich der Skala 2 gelangt. Im allgemeinen wird dann ein Zustand erreicht, wie er im mittleren Teil der Figur 3a dargestellt ist, wobei der Flüssigkeitspegel im Schlauch 1 selbstverständlich auch unterhalb des Markierelementes 7 liegen kann. Anschließend wird die gesamte Skala 2 mit beiden Markierelementen 7, 8 so verschoben, daß wiederum das obere Markierelement 7 in Übereinstimmung mit dem Flüssigkeitspegel steht, woraufhin dann vom Markierelement 8 der Höhenwert 4' abgelesen bzw. abgenommen werden kann, der nunmehr exakt mit der Höhe des Punktes 4 übereinstimmt. Dabei ist selbstverständlich vorausgesetzt, daß während der Übertragung an der Höhe des Ausgleichsbehälters 6 am anderen Stativ 10' nichts geändert wird, das Stativ 10' also nach Möglichkeit an einem fest gewählten Ort stehen bleibt. Dieser Ort kann in der Nähe einer der beiden Orte der Höhenwerte 4, 4' liegen, er kann jedoch beispielsweise auch genau in der Mitte zwischen diesen beiden Stellen liegen, wobei bei einer solchen Konfiguration eine maximale Reichweite der Schlauchwaage erzielt wird, die Punkte 4, 4' also in etwa doppelt so weit auseinanderliegen können, wie es der Länge des Schlauches 1 entspricht.

Es versteht sich, daß an die Stelle eines der Markierelemente 7 oder 8 auch ein bestimmter Fixpunkt der Skala, z.B. der Skalenendpunkt oder -nullpunkt treten könnte, wobei zu Beginn der Festpunktübertragung dieser Fixpunkt mit dem Flüssigkeitsniveau im Schlauchabschnitt 1a in Übereinstimmung gebracht und das verbleibende Markierelement auf die Höhe des Festpunktes 4 gebracht würde.

Figur 3b stellt ein Verfahren zur Messung von Höhendifferenzen dar. Die Höhendifferenzen werden relativ zu einem beliebigen Bezugspunkt unmittelbar gemessen. Nach der Darstellung im linken Teil der Figur 3b ist der Bezugspunkt durch die Übereinstimmung des Flüssigkeitspegels im Schlauchabschnitt 1a mit der Nullmarkierung auf der Skala 2 definiert. Da der Abstand dieses Punktes zum Fußpunkt des Stativs festliegt, kann in gleicher Weise auch der Punkt des Bodens, auf welchem das Stativ steht, als Ausgangspunkt für das Nivellement angesehen werden.

Bringt man nun das Stativ an einen beliebigen anderen Ort, so wird im allgemeinen der Flüssigkeitsspiegel im Schlauchabschnitt 1a nicht mehr mit der Nullmarkierung der Skala übereinstimmen, wobei jedoch auf der Skala als Abweichung des Flüssigkeitsspiegels vom Skalennullpunkt die Höhendifferenz des Meßpunktes zum Ausgangspunkt unmittelbar abgelesen werden kann. Der zur Verfügung stehende Meßbereich ist im Prinzip beliebig. Die Skala kann gegebenenfalls entsprechende Verlängerungen aufweisen oder kann ein Auswechselteil sein, das je nach Anwendungsfall unterschiedliche Meßbereiche abdeckt.

In Figur 4 sind die beiden Stative 10, 10' zusammengestellt worden, wobei die Fußplatte 11 auf den Bügel 24 aufgeschoben wurde, wobei das Rohr 12' in dem Schlitz 16 der Fußplatte 11 aufgenommen ist. In diesem Zustand kann man beide Stative 10,10' gemeinsam mit einer Hand erfassen und zu verschiedenen Einsatzorten, beispielsweise auf einer Baustelle, in verschiedene Etagen etc., tragen. Es ist hierfür nicht erforderlich, die Schlauchwaage vollständig auseinanderzunehmen.

Selbstverständlich gibt es auch beliebige andere Möglichkeiten, die beiden Stative 10, 10' für den Transport auf einer Baustelle zusammenzustellen. Beispielsweise könnte der Fuß 11 auch einfach unter den Bügel 24 geschoben werden, vorausgesetzt, die Breite des Fußes 11 und des Bügels 24 sind darauf abgestimmt.

Figur 5 zeigt schematisch eine Möglichkeit, wie das Stativ 10 mit seinem oberen Bereich bündig an eine Wand oder in der Ecke einer Wand 17 angelegt werden kann, was die Ablesegenauigkeit und die Übertragung von Höhenwerten der Wand oder auf die Wand beträchtlich erleichtert, Hierzu weist das Rohr 13 unterhalb des Schlauchhalters 5 eine im Detail nicht näher dargestellte Knickstelle 15 auf, die aus einem federnd vorgespannten Scharnier besteht, wobei die federnde Vorspannung so gewählt ist, daß das Rohr 13 seine vertikal gestreckte Stellung behält, jedoch gegen die Vorspannung der Feder geknickt bzw. abgewinkelt werden kann, wie dies in Figur 5 dargestellt ist.

Die Anbringung beider Schlauchenden 1, 1' an Stativen erleichtert das Arbeiten mit diesem Gerät beträchtlich, da die Bedienperson beide Hände frei hat und dabei gegebenenfalls alle erforderlichen Notizen anfertigen kann.

Figur 6 zeigt die Schlauchwaage in einem demontierten und für den Transport zusammengesteckten Zustand. Dabei werden die Stativteile an den Halterungselementen 26, 27 gelagert bzw. befestigt. Das den Ausgleichsbehälter 6 tragende obere Ende des Statives 10' ist in ein Rohr 31 gesteckt. Das in Figur 6 nicht sichtbare Ende des Schlauches 1 ist durch das Lüftungsventil 9 oder durch ein zusätzliches Absperrventil verschlossen, so daß keinerlei Flüssigkeit aus dem System austreten kann. Die gesamte Schlauchwaage läßt sich in diesem zusammengesteckten Zustand leicht an dem Handgriff 25 tragen.

Die Vorrichtung besteht aus handelsüblichen Blechen und Profilen aus Aluminium. Der Flüssigkeitsbehälter ist aus strapazierfähigem, durchscheinendem Kunststoff hergestellt und hat eine große, einfach verschließbare Befüllöffnung.

## Patentansprüche

1. Verfahren zum Übertragen eines Höhenniveaus mittels einer Schlauchwaage, dadurch gekennzeichnet, daß eine vom Schlauch unabhängige, jedoch mit einem Schlauchabschnitt verbindbare Skala mit einem Fixpunkt entweder auf das Flüssigkeitsniveau der Schlauchwaage oder auf den zu übertragenden Höhenwert eingestellt wird, daß eine verschiebbare Markierung an der Skala auf den jeweils anderen Wert, d.h. den zu übertragenden Höhenwert oder das Flüssigkeitsniveau, eingestellt wird und daß die Skala, vorzugsweise zusammen mit dem beweglichen Ende der Schlauchwaage an den Übertragungsort transportiertwird, wobei wiederum die Markierung oder der Fixpunkt auf das Flüssigkeitsniveau eingestellt wird und das gewünschte Höhenniveau von dem jeweils anderen Punkt (Fixpunkt oder Markierung) übernommen wird.

2. Verfahren zum Übertragen eines Höhenniveaus nach Anspruch 1, dadurch gekennzeichnet, daß als Fixpunkt ein Skalen-Null- oder -Endpunkt gewählt wird.

3. Verfahren nach Anspruch 1 oder 2, dadurch gekennzeichnet, daß zu Beginn des Übertragungsvorganges die Skala in der Nähe des ortsfesten Schlauchendes am beweglichen Schlauchende eingestellt und an diesem fixiert wird.

4. Vorrichtung zum Übertragen eines Höhenniveaus und zum Messen von Niveauunterschieden, bestehend aus einer Schlauchwaage mit einem im allgemeinen ortsfest anzuordnenden Schlauchende, mit Ausgleichsbehälter (6) und einem relativ hierzu bewegbaren Schlauchende (3) mit Skala, dadurch gekennzeichnet, daß die Skala relativ zum bewegbaren Schlauchende in Längsrichtung des Schlauchendes verschiebbar und in einer verschobenen Stellung fixierbar ist.

5. Vorrichtung nach Anspruch 4, dadurch gekennzeichnet, daß das bewegliche Schlauchende und die Skala an einem Stativ angebracht sind.

6. Vorrichtung nach Anspruch 5, dadurch gekennzeichnet, daß das Stativ einen Vertikalstab mit einer Knickstelle aufweist, weiche sich unterhalb der Befestigung für die Skala und den Schlauch am Vertikalstab befindet.

7. Vorrichtung nach Anspruch 6, dadurch gekennzeichnet, daß die Knickstelle ein federnd vorgespanntes Scharnier aufweist.

8. Vorrichtung nach einem der Ansprüche 4 bis 7, dadurch gekennzeichnet, daß das feste und das bewegliche Schlauchende jeweils an teleskopierbaren Stativen befestigt sind.

9. Vorrichtung nach einem der Ansprüche 4 bis 8, dadurch gekennzeichnet, daß der Schlauch auf einer Schlauchrolle aufgewickelt ist, deren Wickelwelle hohl ist und eine koaxiale Drehdurchführung aufweist, die einen von der hohlen Welle ausgehenden radialen sowie einen axialen Anschluß aufweist, wobei vorzugsweise der ortsfeste Schlauchteil mit dem axialen Anschluß und der bewegliche Schlauchteil mit dem radialen Anschluß verbunden ist.

10. Vorrichtung nach einem der Ansprüche 4 bis 9, dadurch gekennzeichnet, daß alle Teile auf einem gemeinsamen Fuß zu einer kompakten Transporteinheit zusammensteckbar sind.
